# EUROPÄISCHE PATENTSCHRIFT

(11) **EP 3 652 036 B1**
(45) Veröffentlichungstag und Bekanntmachung des Hinweises auf die Patenterteilung: **07.09.2022**
(21) Anmeldenummer: 18738261.9
(22) Anmeldetag: 02.07.2018
(51) Int. Cl.: B60W 50/00, G01C 21/34

(54) **FAHRERASSISTENZSYSTEM, FORTBEWEGUNGSMITTEL UND VERFAHREN ZUM SCHLAFPHASENSPEZIFISCHEN BETREIBEN EINES FORTBEWEGUNGSMITTELS**
DRIVER ASSISTANCE SYSTEM, MEANS OF TRANSPORTATION AND METHOD FOR OPERATING A MEANS OF TRANSPORTATION IN A SLEEP-PHASE-SPECIFIC MANNER
SYSTÈME D'AIDE À LA CONDUITE, MOYEN DE LOCOMOTION ET PROCÉDÉ POUR FAIRE FONCTIONNER UN MOYEN DE LOCOMOTION EN FONCTION DES PHASES DE SOMMEIL

(30) Priorität: 14.07.2017 DE 102017212111
(43) Veröffentlichungstag der Anmeldung: 20.05.2020
(73) Patentinhaber: Volkswagen Aktiengesellschaft, 38440 Wolfsburg (DE)
(72) Erfinder: WIRTZ, Alexander, 38114 Braunschweig (DE)
(86) Internationale Anmeldenummer: PCT/EP2018/067837
(87) Internationale Veröffentlichungsnummer: WO 2019/011703

(56) Entgegenhaltungen:
- EP-A2- 2 840 000
- DE-A1-102014 225 680
- DE-A1-102015 122 245
- JP-A- 2002 163 799
- US-B1- 9 500 489

## Beschreibung

Fahrerassistenzsystem, Fortbewegungsmittel und Verfahren zum schlafphasenspezifischen Betreiben eines Fortbewegungsmittels

### Stand der Technik

Die vorliegende Erfindung betrifft ein Fahrerassistenzsystem, ein Computerprogrammprodukt, eine Signalfolge, ein Fortbewegungsmittel und ein Verfahren zum schlafphasenspezifischen Betreiben eines Fortbewegungsmittels.

Im Stand der Technik sind automatisiert fahrfähige Fahrzeuge bekannt. Im Zuge der Automatisierung des Personenindividualverkehrs ist zu erwarten, dass die Anwender ein Bedürfnis danach empfinden werden, die Zeit an Bord der Fortbewegungsmittel zum Arbeiten oder zur Erholung zu nutzen.

Mit den derzeitigen Möglichkeiten der Technik ist ein Außentermin außerhalb des Heimatortes meistens mit einer Hotelübernachtung und anschließender Heimfahrt verbunden. Diese Abfolge ist zeit- und kostenintensiv und oft auch stressig. Üblicherweise fährt der Anwender mit seinem Fahrzeug von Ort A nach Ort B, nimmt den Termin wahr, übernachtet in einem Hotel und fährt am nächsten Morgen mit seinem Fahrzeug zurück von Ort B nach Ort A. Dies ist mit einem hohen zeitlichen Aufwand, Kosten für die Fahrt und zusätzlich für das Hotel verbunden.

https://www.pcwelt.de/produkte/GPS-Wecker-fuer-Pendler-iNap-472430.html offenbart einen Wecker, welcher in Abhängigkeit einer geografischen Position (z. B. 2 km vor Erreichen einer Zielposition eine Nachricht an einen Anwender ausgibt, damit sich dieser auf die Ankunft vorbereiten kann.)

https://www.wohnmobilforum.de/w-t96574,start,45.html diskutiert die Möglichkeit, mit einem Wohnmobil auf die Autobahn zu fahren, einen Autopiloten einzuschalten und während der Fahrt zu schlafen.

DE 10 2014 225 680 A offenbart ein Verfahren und eine Vorrichtung zur Übernahmeaufforderung einer Fahraufgabe an den Fahrzeugführer eines Fahrzeugs im Rahmen des automatischen Fahrens des Fahrzeugs. Ein Aufmerksamkeitszustand des Fahrzeugführers und Umfeldbedingungen werden ermittelt, lässt sich die Übergabe sicherer ausführen, wenn der Aufmerksamkeitszustand des Fahrzeugführers ausgewertet wird, und wenn eine Übergabephase und mindestens eine Übernahmeaufforderung an den Fahrzeugführer in Abhängigkeit dieser Auswertung erfolgen.

DE 10 2015 122 245 A offenbart ein Verfahren zum Betreiben eines Kraftfahrzeugs, bei welchem ein einen Grad einer Müdigkeit eines Fahrers des Kraftfahrzeugs beschreibender Zustand mittels einer Zustandsüberwachungseinrichtung bestimmt wird, wobei eine Kraftfahrzeugkomponente des Kraftfahrzeugs abhängig von dem Grad der Müdigkeit in einem Normalmodus und in einem dazu unterschiedlichen Ruhemodus betrieben werden kann, und im Ruhemodus ein die Funktion der charakterisierender Parameter bezüglich der durch den Fahrer empfundenen Funktionswahrnehmung verändert wird. Die Kraftfahrzeugkomponente des Kraftfahrzeugs umfassen einen Sitz, eine Anzeigeeinheit, eine Innenraumbeleuchtung, eine Scheibe, einen Lautsprecher, ein mobiles Gerät und eine Luftzuführöffnung.

Es ist eine Aufgabe der vorliegenden Erfindung, den Schlaf an Bord eines Fortbewegungsmittels bestmöglich zu unterstützen.

Es ist eine Aufgabe der vorliegenden Erfindung, den Schlaf an Bord eines Fortbewegungsmittels so erholsam wie möglich zu gestalten.

### Offenbarung der Erfindung

Die vorstehend genannte Aufgabe wird erfindungsgemäß durch ein Verfahren zum schlafphasenspezifischen Betreiben eines Fortbewegungsmittels gelöst. Das Fortbewegungsmittel kann beispielsweise ein straßenzugelassenes Fahrzeug sein. Alternativ oder zusätzlich kann es sich um ein Wasserfahrzeug oder ein Luftfahrzeug handeln. In einem ersten Schritt wird eine Schlafphase eines ersten Insassen des Fortbewegungsmittels sensorisch ermittelt. Mit anderen Worten wird überprüft, in welcher (Art) Schlafphase sich der Insasse aktuell befindet. Optional können auch die Erfordernisse der Schlafphase bzw. des Insassen in der Schlafphase an die Umgebung ermittelt werden. Aufgrund der Erfordernisse wird die Führung des Fortbewegungsmittels hinsichtlich Längs- und/oder Querführung in einem zweiten Schritt entsprechend angepass, um die Schlafphase bestmöglich zu unterstützen oder zumindest geringstmöglich zu stören. Insbesondere für den Fall, dass die Schlafphase auf einen leichten Schlaf des Insassen hinweist, kann die Führung des Fortbewegungsmittels behutsamer bzw. defensiver erfolgen, während in Schlafphasen robusteren Schlafes die Führung des Fortbewegungsmittels angepasst werden kann. Beispielsweise kann die Führung nun offensiver bzw. näher am Fahrzweck orientiert werden. Somit ist über einen erholsameren Schlaf auch eine fahrzweckorientierte Fortbewegung sichergestellt,

Die Unteransprüche zeigen bevorzugte Weiterbildungen der Erfindung.

Bevorzugt kann auch die Schlafphase eines zweiten Insassen des Fortbewegungsmittels und bevorzugt weiterer Insassen des Fortbewegungsmittels übermittelt werden. In Abhängigkeit sämtlicher zeitgleicher Schlafphasen-Kategorien kann anschließend die Führung des Fortbewegungsmittels angepasst werden. Beispielsweise kann unter der Voraussetzung, dass zumindest ein Insasse einen leichten Schlaf hat, eine defensive bzw. behutsame Führung des Fortbewegungsmittels erfolgen, obwohl andere Insassen bereits fester schlafen.

Insbesondere kann vordefiniert werden, mit welcher Priorität die Schlafphasen der einzelnen Insassen gegeneinander gewichtet werden sollen. Beispielsweise kann ein Insasse am nächsten Tag einen wichtigen Termin haben, während die anderen sich bei einem Stadtbummel erholen können. Entsprechend kann zumindest sichergestellt werden, dass der Insasse, welcher am nächsten Tag den wichtigen Termin hat, tief schläft, bevor eine raschere Führung des Fortbewegungsmittels erfolgt.

Das Ego-Fortbewegungsmittel kann Informationen bezüglich der bevorstehenden Wegstrecke empfangen. Dies kann beispielsweise von einem weiteren Fortbewegungsmittel (welches dem Ego-Fortbewegungsmittel vorausfährt) oder weiteren Fortbewegungsmitteln und/oder stationären Sensoren erfolgen. Beispielsweise können Fahrbahndaten (Beschleunigungswerte der Fortbewegungsmittel auf der bevorstehenden Wegstrecke) und/oder Geräuschquellen analysiert und dem Ego-Fortbewegungsmittel zur Anpassung seiner Führung zur Verfügung gestellt werden. Dies kann beispielsweise durch Car-to-Car und/oder Car-to-X-Kommunikation erfolgen. Auf diese Weise kann eine bestmögliche Informationsbasis für die vorausschauende Anpassung der Führung des Fortbewegungsmittels geschaffen werden.

Bevorzugt kann auch die Position einer Sitzgelegenheit/ eines Insassenplatzes des Fortbewegungsmittels automatisch ermittelt werden. Hierzu können Sensoren die aktuelle Sitzeinstellung bzw. Einstellung der Schlafgelegenheit des Insassen bzw. der Insassen melden und in Abhängigkeit der ermittelten Sitzposition die Führung des Fortbewegungsmittels angepasst werden. Beispielsweise kann eine aufrechte Rückenlage darauf hinweisen, dass der Anwender/Insasse derzeit nicht zu schlafen gedenkt bzw. nicht endgültig zu schlafen gedenkt. Entsprechend kann in einer solchen Situation eine raschere Fortbewegung erfolgen, als wenn sich die Sitzgelegenheit in einer im Wesentlichen waagerechten Position befindet, wodurch der Anwenderwunsch erkannt werden kann, Nachtruhe zu halten.

Weiter bevorzugt kann eine vordefinierte Ankunftszeit des Fortbewegungsmittels ausgewertet werden. Die vordefinierte Ankunftszeit kann eine Wunsch-Ankunftszeit (z. B. eine vordefinierte Zeit vor einem beispielsweise digital vordefinierten Termin eines Insassen) sein. In Abhängigkeit der Ankunftszeit kann die Führung des Fortbewegungsmittels derart angepasst werden, dass die Führung des Fortbewegungsmittels darauf ausgelegt wird, möglichst effizient zum vordefinierten Ankunftszeitpunkt am Zielort anzukommen. Auf diese Weise kann die Reisegeschwindigkeit verringert werden, der Luft- und Rollwiderstand minimiert und die Effizienz der Reise maximiert werden. Dieser Aspekt kann einen selbstständigen Aspekt unabhängig von der Ermittlung der Schlafphasen und der übrigen oben genannten Verfahrensschritte darstellen. Insbesondere kann dieser Aspekt jedoch in Verbindung mit der Schlafphasenermittlung und/oder einem oben genannten Verfahrensaspekt, mehreren oben genannten Verfahrensaspekten oder gar sämtlichen oben genannten Verfahrensaspekten verwendet werden. Hierbei kann die Berücksichtigung der Schlafphasen umso höher gewichtet werden, je sicherer das rechtzeitige Erreichen des Zielortes zur vordefinierten Ankunftszeit ist. Insbesondere für den Fall, dass Verkehrsmeldungen jedoch eine ungewisse Verkehrsflussgeschwindigkeit verheißen lassen, kann die vordefinierte Ankunftszeit gegenüber der Berücksichtigung der Schlafphase des Insassen höher gewichtet werden, um die rechtzeitige Ankunft sicherzustellen.

Die Rücksichtnahme auf die Schlafphase des Insassen bzw. Schlafphasen der Insassen kann beispielsweise durch die folgenden Maßnahmen erfolgen. Neben angepasster Längs- und/ oder Querbeschleunigung können Fahrwerks- und/oder Dämpfereinstellungen dafür sorgen, dass die Beschleunigungen der Fahrgastzelle bzw. der Schlafgelegenheit und damit der Insassen insbesondere dann gering gehalten werden, wenn ein leichter Schlaf erkannt wurde. Geschwindigkeit und/oder Beschleunigungsverhalten und/oder Querführung des Fortbewegungsmittels können angepasst werden, um möglichst geringe Kräfte auf den Insassen zu übertragen. Hierzu kann auch die Motorsteuerung und/oder die Fahrwerkseinstellung angepasst werden. Zusätzlich kann die Heizung/Klimatisierung der Fahrgastzelle an die Schlafphase angepasst werden. Auch die Route selbst kann zusätzlich neu berechnet werden, sofern bisherig errechnete, vorausliegende Routenabschnitte als unangebracht für die aktuelle und/oder bevorstehende Schlafphase bzw. Schlafphasen ermittelt werden. Beispielsweise kann eine weniger kurvenreiche Strecke verwendet werden, sofern der Schlaf des Insassen gegenüber einer bisherigen Abschätzung leichter ausfällt. Andererseits kann beispielsweise eine Autobahnfahrt mit höheren Strömungsgeräuschen vermieden werden, solange der Anwender nicht in eine robustere Tiefschlafphase gefunden hat. Die vorgenannten Maßnahmen zur Berücksichtigung der Schlafphase sind beispielhaft und nicht abschließend zu verstehen.

Die Schlafphase kann beispielsweise mittels einer Innenraumkamera, mittels eines Drucksensors, mittels eines Beschleunigungssensors (insbesondere 3-Wege-Beschleunigungssensor), mittels eines Blutsauerstoff-Sensors und/oder mittels eines Mikrofons ermittelt werden. Die Innenraumkamera kann Bewegungen des Anwenders ermitteln. Der Drucksensor kann beispielsweise in eine Schlafgelegenheit eingearbeitet sein, um Bewegungen unabhängig von der Position des Insassen gegenüber der Innenraumkamera zu ermitteln. Der Beschleunigungssensor kann Vibrationen ("Schnarchen") und andere Körperschallereignisse ermitteln. Der Blutsauerstoff-Sensor kann beispielsweise an einem Finger des Anwenders angebracht sein, um die Blutsauerstoff-Sättigung des Anwenders zu ermitteln und einer vordefinierten Schlafphase bzw. Schlafphasen-Kategorie zuzuordnen. Auch mittels des Mikrofons können Atemgeräusche und Schnarchen ermittelt werden. Auch die vorgenannten Hilfsmittel zur Ermittlung der Schlafphase sind nicht abschließend oder limitierend zu verstehen und können einzeln oder in einer beliebigen Kombination verwendet werden.

Gemäß einem zweiten Aspekt der vorliegenden Erfindung wird ein Fahrerassistenzsystem zum schlafphasenspezifischen Betreiben eines Fortbewegungsmittels vorgeschlagen. Das Fahrerassistenzsystem dient dazu, einen Schlaf an Bord des Fortbewegungsmittels zu unterstützen und insbesondere erholsamer zu gestalten. Es umfasst einen Dateneingang, welcher beispielsweise als BUS-Teilnehmer, als elektrische Leitung, als optische Leitung o. Ä. ausgestaltet sein kann. Der Dateneingang ist eingerichtet, die eingegangenen Signale an eine Auswerteeinheit weiterzuleiten, welche beispielsweise als elektronisches Steuergerät, als Mikrocontroller, als programmierbarer Prozessor o. Ä. ausgestaltet sein kann. Über einen Datenausgang kann die Auswerteeinheit die Führung des Fortbewegungsmittels bzw. die Routenneuberechnung automatisch veranlassen. Auf diese Weise ist die Auswerteeinheit eingerichtet, in Verbindung mit dem Dateneingang eine Schlafphase eines ersten Insassen des Fortbewegungsmittels zu ermitteln und in Verbindung mit dem Datenausgang automatisch eine Führung des Fortbewegungsmittels hinsichtlich Längs- und/oder Querführung in Abhängigkeit der Schlafphase des ersten Insassen bzw. weiterer Insassen anzupassen. Auf diese Weise ist das erfindungsgemäße Fahrerassistenzsystem eingerichtet, die Merkmale, Merkmalskombinationen und die sich aus diesen ergebenden Vorteile des erfindungsgemäßen Verfahrens in entsprechender Weise auszuführen, sodass zur Vermeidung von Wiederholungen auf die obigen Ausführungen verwiesen wird.

Gemäß einem dritten Aspekt der vorliegenden Erfindung wird ein Computerprogrammprodukt (z. B. ein Datenspeicher) vorgeschlagen, auf welchem Instruktionen gespeichert sind, die einen programmierbaren Prozessor bzw. ein elektronisches Steuergerät in die Lage versetzen, die Schritte eines Verfahrens gemäß dem erstgenannten Erfindungsaspekt auszuführen. Das Computerprogrammprodukt kann beispielsweise als CD, DVD, Blue-Ray-Disc, Flash-Speicher, Festplatte, RAM/ROM, Cache etc. ausgestaltet sein.

Gemäß einem vierten Aspekt der vorliegenden Erfindung wird eine Signalfolge vorgeschlagen, welche Instruktionen repräsentiert, die, wenn sie auf einem programmierbaren Prozessor ausgeführt werden, diesen in die Lage versetzen, die Schritte eines Verfahrens gemäß dem erstgenannten Erfindungsaspekt durchzuführen. Auf diese Weise wird auch die informationstechnische Bereitstellung der Instruktionen für den Fall unter Schutz gestellt, dass sich die hierzu erforderlichen Speichermittel außerhalb des Geltungsbereiches der beigefügten Ansprüche befinden.

Gemäß einem fünften Aspekt der vorliegenden Erfindung wird ein Fortbewegungsmittel vorgeschlagen, welches beispielsweise als Pkw, Transporter, Lkw, Luft- und/oder Wasserfahrzeug ausgestaltet sein kann. Auch das Fortbewegungsmittel weist durch das erfindungsgemäße Fahrerassistenzsystem die Möglichkeit auf, die Schritte eines Verfahrens gemäß dem erstgenannten Erfindungsaspekt auszuführen und somit die Merkmale, Merkmalkombinationen und Vorteile der vorliegenden Erfindung derart ersichtlich in entsprechender Weise zu verwirklichen, dass zur Vermeidung von Wiederholungen auf die obigen Ausführungen verwiesen wird.

Sobald es beim autonomen Fahren möglich ist, mit "Level 5" zu reisen (bei diesem Automatisierungslevel ist kein Fahrer mehr nötig), ergibt sich die Möglichkeit des Schlafens während der Fahrt. Die Fahrgastzelle kann hierbei einem fahrenden Hotelzimmer gleichen. Im fahrenden Hotelzimmer können ein bis zwei Personen in Liege-/Schlafposition über lange Distanzen autonom fahren bzw. gefahren werden und dabei erholsam schlafen. Beispielsweise nach einem Termin in einer entfernten Stadt bestellt sich der Anwender statt einem Taxi zum Hotel einfach einen erfindungsgemäßen "Schlafwagen". Nach dem Einsteigen schläft der Insasse die komplette Fahrt und wird kurz vor der Ankunft wieder geweckt. Im Unterschied zu bisherigen Fahrzeugen kann die Fahrt zum Schlafen bzw. die Fahrgastzelle als Schlafwagen verwendet werden. Insbesondere kann die Fahrgastzelle auf herkömmliche Sitzgelegenheiten verzichten, sofern der Fahrgast den Wunsch äußert, die gesamte Fahrt über zu schlafen. Die Fahrzeuge können wie herkömmliche Hotelzimmer für jeden Gast vorbereitet werden. Mit anderen Worten werden die Betten gemacht, die Minibar gefüllt und eine umfangreiche Reinigung durchgeführt, bevor der Fahrgast die Fahrgastzelle betritt. Dies kann beispielsweise in Kooperation mit Hotelketten erfolgen. Die vorliegende Erfindung kann auf einem Grundfahrzeug mit allen Funktionen und dem benötigten Raum aufbauen. Beispielsweise kann ein Transporter mit einer hinreichenden Grundfläche seiner Fahrgastzelle zur Installation von Schlafgelegenheiten verwendet werden. So wie jede Fluggesellschaft spezielle Sitze, Interieur, Ausstattungen und Lackierungen in ihren Flugzeugen verwendet, erhalten diese "Schlafwagen" (Fortbewegungsmittel) ebenfalls diese spezielle Hotelausstattung. Die speziellen Fahrzeuge können im Stil einer Hotelkette gestaltet sein und ähnliche Ausstattungen wie ein Hotelzimmer aufweisen. Beispielsweise können ein komfortables Bett, ein Fernseher, ein Ambientelicht, ein Panoramadach, eine Minibar und weitere Inneneinrichtungsgegenstände herkömmlicher Hotelzimmer vorhanden sein. Diese Fahrzeuge können über eine Applikation ("App") z. B. mittels Smartphones bestellt oder direkt bei der betreibenden Hotelkette zur Verfügung gestellt werden. Das Fahrziel kann in herkömmlicher Weise eingegeben (Texteingabe, Spracheingabe o. Ä.) und nach Bedarf mit einer Weckzeit (z. B. 15 Minuten vor Ankunft, 5 km vor Ankunft o. Ä.) versehen werden. Die Vorbereitung der Schlafwagen kann in den Bereichen der Hoteltiefgaragen geschehen. Mit anderen Worten kann die zur Pflege der herkömmlichen Hotelzimmer erforderliche Infrastruktur auch zur Pflege der erfindungsgemäß vorgeschlagenen Schlafwagen verwendet werden, wodurch Synergien die Kosten für die Bereitstellung gering halten. Als Beispiel seien die Wäscherei, die Verpflegung, die Zimmerreinigung und das Laden/Befüllen eines Energiespeichers genannt, wodurch der Mehraufwand äußerst gering ausfallen kann. Um eine Fahrt für längere Distanzen gewährleisten zu können, können elektrische Antriebsvarianten umfassend eine Brennstoffzelle berücksichtigt werden. Auch spezielle Versorgungspunkte auf Autobahnen können verwendet werden, die nach Äußerung eines entsprechenden Anwenderwunsches/Insassenwunsches automatisch angesteuert werden. Hier können abgeschirmte sanitäre Anlagen bereitstehen. Auch eine Kopplung zu bestehenden Infrastrukturen wie z. B. Flughäfen wäre möglich. Die Passagiere können in unmittelbarer Nähe der für sie zuständigen Check-in-Schalter gefahren werden, wodurch die Wege kurz, bequem und die Reisezeit verringert werden kann.

Durch die vorliegende Erfindung ist das Zusammenlegen von bislang zwei getrennt verlaufenden Phasen einer Dienstreise möglich. Das Übernachten und das nachträgliche nach Hause Fahren können zeitgleich und bequem erfolgen. Durch das erfindungsgemäße Fortbewegungsmittel ist nicht lediglich ein Ruhen, sondern ein erholsamer Schlaf auf dem Weg nach Hause bzw. zum nächsten Termin möglich.

### Kurzbeschreibung der Figuren

Nachfolgend werden Ausführungsbeispiele der vorliegenden Erfindung anhand der beigefügten Zeichnungen im Detail beschrieben. In den Zeichnungen ist:
Figur 1 eine schematische Darstellung eines Ausführungsbeispiels eines erfindungsgemäßen Fortbewegungsmittels mit einem Ausführungsbeispiel eines erfindungsgemäß ausgestalteten Fahrerassistenzsystems;
Figur 2 eine schematische Darstellung einer Fahrsituation zweier Fortbewegungsmittel bei der Kommunikation routenspezifischer Informationen gemäß einem Ausführungsbeispiel der vorliegenden Erfindung; und
Figur 3 ein Flussdiagramm veranschaulichend Schritte eines Ausführungsbeispiels eines erfindungsgemäßen Verfahrens.

### Ausführungsformen der Erfindung

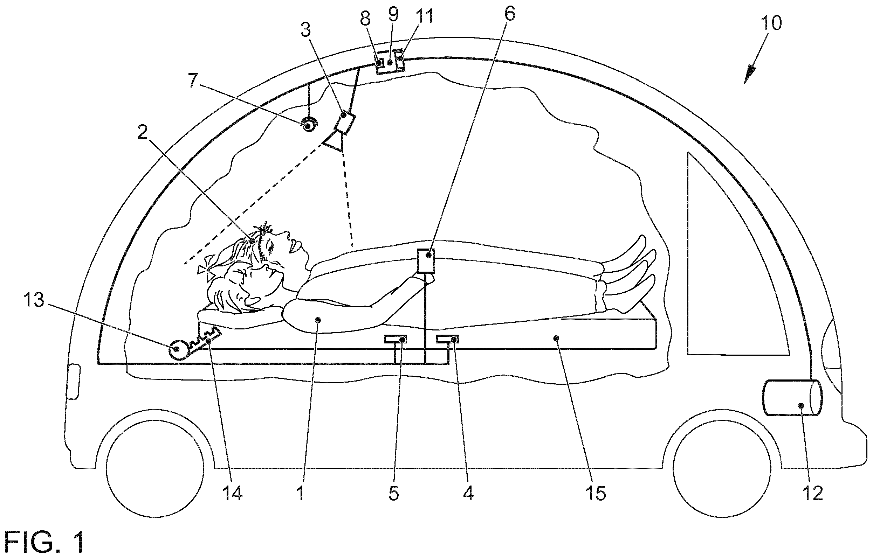

Figur 1 zeigt eine teilweise frei geschnittene Darstellung eines Ausführungsbeispiels eines erfindungsgemäßen Schlafwagens 10 als Fortbewegungsmittel, innerhalb dessen ein Anwender und eine Anwenderin auf einer Matratze eines Bettes 15 liegen. Beide befinden sich im Erfassungsbereich einer Innenraumkamera 3, mittels welcher Bewegungen der Anwender 1, 2 erfasst werden können. Überdies sind ein Drucksensor 4 und ein Beschleunigungssensor 5 in die Matratze eingearbeitet. Die vom Beschleunigungssensor 5 und dem Drucksensor 4 ermittelten Informationen werden über eine Datenleitung ebenso wie die Aufnahmen eines Innenraummikrofons 7 an den Dateneingang 8 eines elektronischen Steuergerätes 9 als Auswerteeinheit gesendet. Auch die Position einer Zahnstange 14, mittels welcher über einen Elektromotor 13 die Ausrichtung des Betts 15 angepasst werden kann, kann über den Dateneingang 8 durch das elektronische Steuergerät 9 zur Ermittlung einer Schlafphase der Anwender 1, 2 herangezogen werden. Nachdem die (mutmaßliche) Schlafphasen-Kategorie ermittelt worden ist, wird über einen Datenausgang 11 ein Elektromotor 12 angesteuer, um die Längsbeschleunigung und die Querbeschleunigung des Schlafwagens 10 an die aktuelle Schlafphase anzupassen.

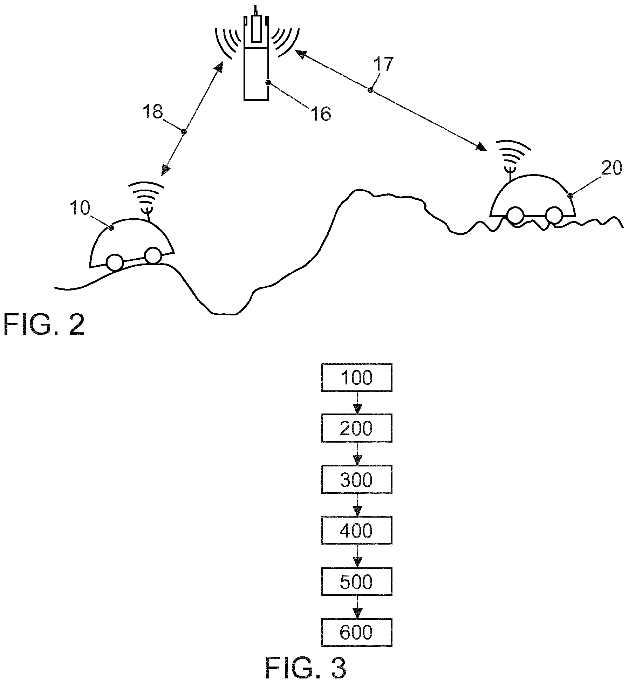

In Figur 2 ist ein Szenario dargestellt, in welchem ein in Figur 1 bereits vorgestellter Schlafwagen 10 über eine Drahtloskommunikationsverbindung 17, einen Sendeturm 16 und eine Kommunikationsverbindung 18 mit einem vorausfahrenden Pkw 20 kommuniziert. Der vorausfahrende Pkw 20 fährt über eine unebene Fahrbahn, wodurch Erschütterungen bzw. Vibrationen bzw. Wechselbeschleunigungen auftreten, welche je nach Schlafphase eines im Schlafwagen 10 schlafenden Insassen als störend bzw. den Schlaf gefährdend angenommen werden müssen. Um die negativen Einflüsse auf den Schlaf des Insassen zu vermeiden, kann im Ansprechen auf die vom Pkw 20 ermittelte Erkenntnis eine Routenneuberechnung unter Umgehung der vom Pkw 20 befahrenen unebenen Wegstrecke und/oder eine Anpassung des Fahrwerkes sowie der Reisegeschwindigkeit vorgenommen werden, um die nachteilige Auswirkung auf den Schlaf der Anwender zu lindern bzw. vollständig zu umgehen.

Figur 3 zeigt Schritte eines Ausführungsbeispiels eines erfindungsgemäßen Verfahrens zum schlafphasenspezifischen Betreiben eines Fortbewegungsmittels. In einem ersten Schritt wird eine Schlafphase eines ersten Insassen des Fortbewegungsmittels sensorisch ermittelt. In Schritt 200 erfolgt Entsprechendes auch für einen zweiten Insassen und ggf. weitere Insassen des Ego-Fortbewegungsmittels. In Schritt 300 werden Informationen bezüglich der Fahrbahndaten und der Geräuschquellen auf einer bevorstehenden Wegstrecke von einem weiteren Fortbewegungsmittel ermittelt und dem Ego-Fortbewegungsmittel zur Verfügung gestellt. Zudem wird in Schritt 400 eine Sitzposition des Fortbewegungsmittels ermittelt, anhand welcher ein Rückschluss auf die Intention des Anwenders, zu schlafen oder lediglich zu ruhen, geschlossen werden kann. In Schritt 500 wird eine vordefinierte Ankunftszeit als Wunsch-Ankunftszeit des Anwenders des Fortbewegungsmittels ausgewertet. Dies kann beispielsweise durch bekannte navigationsbezogene Algorithmen erfolgen. In Abhängigkeit der zu erwartenden Reisezeit und Verkehrsflussprognosen kann nun eine erforderliche (mittlere) Reisegeschwindigkeit ermittelt und eine entsprechende Planung der Reisegeschwindigkeit, der Reiseroute und der zeitgleichen Berücksichtigung der Schlafphasen der Insassen des Fortbewegungsmittels erfolgen. Schließlich wird in Schritt 600 die Führung des Fortbewegungsmittels an die vorangegangen ermittelten Erkenntnisse angepasst. Der Anwender gelangt daher ausgeschlafen und rechtzeitig zum gewünschten Zielort und vermeidet einen kostspieligen und zeitraubenden Hotelaufenthalt.

### Bezugszeichenliste

- 1: Anwender
- 2: Anwenderin
- 3: Innenraumkamera
- 4: Drucksensor
- 5: Beschleunigungssensor
- 6: Blutsauerstoff-Sensor
- 7: Innenraummikrofon
- 8: Dateneingang
- 9: elektronisches Steuergerät
- 10: Schlafwagen
- 11: Datenausgang
- 12: Elektromotor (Traktionsmaschine)
- 13: Elektromotor (zur Schlafpositionsanpassung)
- 14: Zahnstange
- 15: Bett
- 100- 600: Verfahrensschritte

## Patentansprüche

1. Verfahren zum schlafphasenspezifischen Betreiben eines Fortbewegungsmittels (10) umfassend die Schritte:
- sensorisches Ermitteln (100) einer Schlafphase eines ersten Insassen (1) des Fortbewegungsmittels (10) und in Abhängigkeit der Schlafphase
- Anpassen (600) einer Führung des Fortbewegungsmittels (10) hinsichtlich Längs- und/oder Querführung.

2. Verfahren nach Anspruch 1 weiter umfassend
- sensorisches Ermitteln (200) einer Schlafphase eines zweiten Insassen (2) des Fortbewegungsmittels (10) und in Abhängigkeit der Schlafphase des zweiten Insassen (2) sowie in Abhängigkeit der Schlafphase des ersten Insassen (1)
- Anpassen (600) der Führung des Fortbewegungsmittels (10).

3. Verfahren nach Anspruch 1 oder 2 weiter umfassend
- Empfangen (300) von Informationen, insbesondere bezüglich Fahrbahndaten und/oder Geräuschquellen, zu einer dem Fortbewegungsmittel (10) bevorstehenden Wegstrecke und in Abhängigkeit der Informationen
- Anpassen (600) der Führung des Fortbewegungsmittels (10).

4. Verfahren nach einem der vorstehenden Ansprüche weiter umfassend
- Ermitteln (400) einer Sitzposition des Fortbewegungsmittels (10) und in Abhängigkeit der Sitzposition
- Anpassen (600) der Führung des Fortbewegungsmittels (10).

5. Verfahren nach einem der vorstehenden Ansprüche weiter umfassend
- Auswerten (500) einer vordefinierten Ankunftszeit des Fortbewegungsmittels (10) und
- Berücksichtigen der vordefinierten Ankunftszeit bei der Anpassung der Führung des Fortbewegungsmittels (10).

6. Verfahren nach einem der vorstehenden Ansprüche, wobei das Ermitteln der Schlafphase mittels
- einer Innenraumkamera (3) und/oder
- eines Drucksensors (4) und/oder
- eines Beschleunigungssensor (5) und/oder
- eines Blutsauerstoff-Sensors (6) und/oder
- eines Mikrophons (7)
erfolgt.

7. Fahrerassistenzsystem zum schlafphasenspezifischen Betreiben eines Fortbewegungsmittels (10) umfassend
- einen Dateneingang (8),
- eine Auswerteeinheit (9) und
- einen Datenausgang (11), wobei
die Auswerteeinheit (9) eingerichtet ist,
- in Verbindung mit dem Dateneingang (8) eine Schlafphase eines ersten Insassen (1) des Fortbewegungsmittels (10) zu ermitteln und
- in Verbindung mit dem Datenausgang (11) eine Führung des Fortbewegungsmittels (10) hinsichtlich Längs- und/oder Querführung in Abhängigkeit der Schlafphase anzupassen.

8. Fahrerassistenzsystem nach Anspruch 7, welches eingerichtet ist, ein Verfahren nach einem der vorstehenden Ansprüche 1 bis 6 auszuführen.

9. Computerprogrammprodukt umfassend Instruktionen, welche, wenn Sie auf einer Auswerteeinheit (9) eines Fahrerassistenzsystems ausgeführt werden, die Auswerteeinheit (9) veranlassen, die Schritte eines Verfahrens nach einem der Ansprüche 1 bis 6 durchzuführen.

10. Signalfolge repräsentierend Instruktionen, welche, wenn Sie auf einer Auswerteeinheit (9) eines Fahrerassistenzsystems ausgeführt werden, die Auswerteeinheit (9) veranlassen, die Schritte eines Verfahrens nach einem der Ansprüche 1 bis 6 durchzuführen.

11. Fortbewegungsmittel umfassend eine Schlafgelegenheit, insbesondere ein Bett (15), und ein Fahrerassistenzsystem nach Anspruch 7 oder 8.

12. Fortbewegungsmittel nach Anspruch 11, wobei das Fortbewegungsmittel (10) ein automatisch fahrfähiges Fortbewegungsmittel (10) ist.

13. Fortbewegungsmittel nach Anspruch 11 oder 12, wobei das Fortbewegungsmittel (10) ein Straßenfahrzeug ist.

## Claims

1. Method for the sleeping phase-specific operation of a means of transport (10), comprising the following steps:
- using sensors to ascertain (100) a sleeping phase of a first occupant (1) of the means of transport (10) and, based on the sleeping phase,
- adapting (600) guidance of the means of transport (10) in terms of longitudinal and/or transverse guidance.

2. Method according to Claim 1, furthermore comprising
- using sensors to ascertain (200) a sleeping phase of a second occupant (2) of the means of transport (10) and, based on the sleeping phase of the second occupant (2) and based on the sleeping phase of the first occupant (1),
- adapting (600) the guidance of the means of transport (10).

3. Method according to Claim 1 or 2, furthermore comprising
- receiving (300) information, in particular in relation to roadway data and/or noise sources, for a route ahead of the means of transport (10) and, based on the information,
- adapting (600) the guidance of the means of transport (10).

4. Method according to one of the preceding claims, furthermore comprising
- ascertaining (400) a seat position of the means of transport (10) and, based on the seat position,
- adapting (600) the guidance of the means of transport (10).

5. Method according to one of the preceding claims, furthermore comprising
- evaluating (500) a predefined arrival time of the means of transport (10) and
- taking the predefined arrival time into consideration when adapting the guidance of the means of transport (10).

6. Method according to one of the preceding claims, wherein the sleeping phase is ascertained by way of
- a passenger compartment camera (3) and/or
- a pressure sensor (4) and/or
- an acceleration sensor (5) and/or
- a blood oxygen sensor (6) and/or
- a microphone (7).

7. Driver assistance system for the sleeping phase-specific operation of a means of transport (10) comprising
- a data input (8),
- an evaluation unit (9) and
- a data output (11), wherein
the evaluation unit (9) is designed,
- in conjunction with the data input (8), to ascertain a sleeping phase of a first occupant (1) of the means of transport (10) and,
- in conjunction with the data output (11), to adapt guidance of the means of transport (10) in terms of longitudinal and/or transverse guidance based on the sleeping phase.

8. Driver assistance system according to Claim 7, designed to carry out a method according to one of preceding Claims 1 to 6.

9. Computer program product comprising instructions that, when they are executed on an evaluation unit (9) of a driver assistance system, prompt the evaluation unit (9) to perform the steps of a method according to one of Claims 1 to 6.

10. Signal sequence representing instructions that, when they are executed on an evaluation unit (9) of a driver assistance system, prompt the evaluation unit (9) to perform the steps of a method according to one of Claims 1 to 6.

11. Means of transport comprising a sleeping berth, in particular a bed (15), and a driver assistance system according to Claim 7 or 8.

12. Means of transport according to Claim 11, wherein the means of transport (10) is a means of transport (10) with a self-driving capability.

13. Means of transport according to Claim 11 or 12, wherein the means of transport (10) is a road vehicle.

## Revendications

1. Procédé permettant de faire fonctionner un moyen de locomotion (10) de manière spécifique à une phase de sommeil, comprenant les étapes consistant à :
- déterminer par des capteurs (100) une phase de sommeil d'un premier occupant (1) du moyen de locomotion (10), et en fonction de la phase de sommeil,
- adapter (600) un guidage du moyen de locomotion (10) en termes de guidage longitudinal et/ou transversal.

2. Procédé selon la revendication 1, comprenant en outre les étapes consistant à
- déterminer par des capteurs (200) une phase de sommeil d'un deuxième occupant (2) du moyen de locomotion (10), et en fonction de la phase de sommeil du deuxième occupant (2) ainsi qu'en fonction de la phase de sommeil du premier occupant (1),
- adapter (600) le guidage du moyen de locomotion (10) .

3. Procédé selon la revendication 1 ou 2, comprenant en outre les étapes consistant à
- recevoir (300) des informations, en particulier concernant des données de voie de circulation et/ou des sources de bruit, au sujet d'un itinéraire à venir pour le moyen de locomotion (10), et en fonction des informations,
- adapter (600) le guidage du moyen de locomotion (10) .

4. Procédé selon l'une quelconque des revendications précédentes, comprenant en outre les étapes consistant à
- déterminer (400) une position de siège du moyen de locomotion (10), et en fonction de la position de siège,
- adapter (600) le guidage du moyen de locomotion (10) .

5. Procédé selon l'une quelconque des revendications précédentes, comprenant en outre les étapes consistant à
- évaluer (500) une heure d'arrivée prédéfinie du moyen de locomotion (10), et
- prendre en compte l'heure d'arrivée prédéfinie lors de l'adaptation du guidage du moyen de locomotion (10) .

6. Procédé selon l'une quelconque des revendications précédentes, dans lequel la détermination de la phase de sommeil est effectuée au moyen
- d'une caméra d'habitacle (3), et/ou
- d'un capteur de pression (4), et/ou
- d'un capteur d'accélération (5), et/ou
- d'un capteur d'oxygène sanguin (6), et/ou
- d'un microphone (7).

7. Système d'assistance au conducteur permettant de faire fonctionner un moyen de locomotion (10) de manière spécifique à une phase de sommeil, comprenant
- une entrée de données (8),
- une unité d'évaluation (9), et
- une sortie de données (11), dans lequel
l'unité d'évaluation (9) est conçue
- pour déterminer en liaison avec l'entrée de données (8) une phase de sommeil d'un premier occupant (1) du moyen de locomotion (10), et
- pour adapter en liaison avec la sortie de données (11) un guidage du moyen de locomotion (10) en termes de guidage longitudinal et/ou transversal en fonction de la der phase de sommeil.

8. Système d'assistance au conducteur selon la revendication 7 qui est conçu pour exécuter un procédé selon l'une quelconque des revendications précédentes 1 à 6.

9. Produit de programme informatique, comprenant des instructions qui, lorsqu'elles sont exécutées sur une unité d'évaluation (9) d'un système d'assistance au conducteur, font que l'unité d'évaluation (9) exécute les étapes d'un procédé selon l'une quelconque des revendications 1 à 6.

10. Séquence de signaux représentant des instructions qui, lorsqu'elles sont exécutées sur une unité d'évaluation (9) d'un système d'assistance au conducteur, font que l'unité d'évaluation (9) exécute les étapes d'un procédé selon l'une quelconque des revendications 1 à 6.

11. Moyen de locomotion, comprenant du matériel de couchage, en particulier un lit (15), et un système d'assistance au conducteur selon la revendication 7 ou 8.

12. Moyen de locomotion selon la revendication 11, le moyen de locomotion (10) étant un moyen de locomotion (10) apte à la conduite automatique.

13. Moyen de locomotion selon la revendication 11 ou 12, le moyen de locomotion (10) étant un véhicule routier.
